**Europäisches Patentamt**

**European Patent Office**

**Office européen des brevets**

(19)

(11) Veröffentlichungsnummer: **0 312 619 B1**

# EUROPÄISCHE PATENTSCHRIFT

(45) Veröffentlichungstag der Patentschrift: **14.08.91**

(51) Int. Cl.⁵: **B63C 11/52**, B23D 21/04

(21) Anmeldenummer: **87115215.3**

(22) Anmeldetag: **17.10.87**

(54) **Trennvorrichtung zum Durchtrennen von rohrförmigen Bauwerksteilen.**

(43) Veröffentlichungstag der Anmeldung:
**26.04.89 Patentblatt 89/17**

(45) Bekanntmachung des Hinweises auf die
Patenterteilung:
**14.08.91 Patentblatt 91/33**

(84) Benannte Vertragsstaaten:
**DE FR GB IT NL SE**

(56) Entgegenhaltungen:
**FR-A- 2 176 491**
**FR-A- 2 349 787**

(73) Patentinhaber: **MENCK GMBH**
**Werner-von-Siemens-Strasse Postfach 1165**
**W-2086 Ellerau(DE)**

(72) Erfinder: **Kühn, Hans**
**Tierparkallee 27**
**W-2000 Hamburg 54(DE)**

(74) Vertreter: **Meyer, Ludgerus**
**Patentanwälte Meyer, Stach, Vonnemann**
**Jungfernstieg 38**
**W-2000 Hamburg 36(DE)**

## Beschreibung

Die Erfindung betrifft eine Trennvorrichtung zum Durchtrennen von rohrförmigen Bauwerksteilen, insbesondere Bohrinselbeinen oder großkalibrigen Rohrpfählen, mit mindestens einer Schneid- oder Brennvorrichtung zur Einwirkung auf die Umfangsfläche des zu durchtrennenden Bauwerkteils gemäß Gattungsbegriff des Anspruchs 1.

Zur Ausbeutung von unter dem Meeresboden liegenden Rohstoffvorkommen werden schon seit längerem Bohr- und Förderinseln im offenen Meer aufgestellt, deren in hinreichender Höhe über dem Wasserspiegel befindliche Plattformen normalerweise auf einer Tragstruktur aus mehreren bis zum Meeresboden herabreichenden Beinen ruht, die meist untereinander noch durch Querstreben verbunden sind. Derartige Bohrinselbeine und die zugehörigen Querstreben sind in den meisten Fällen dickwandige Stahlrohre großen Durchmessers. Solche Bohr- und Förderinseln werden gewöhnlich durch in den Meeresboden eingerammte, rohrförmige Gründungspfähle festgelegt, die im Innenraum der rohrförmigen Bohrinselbeine oder in an deren Fußbereichen angeordneten Pfahlhalterungen geführt sind, wobei der Pfahl durch Ausgießen des Ringspalts zwischen die und der Pfahlhalterung mit Beton mit der zu verankernden Struktur dauerhaft verbunden wird. Auch zu anderen Zwekken im offenen Meer, an den Küsten oder in Binnengewässern errichtete Bauwerke weisen vielfach rohrförmige Beine und/oder zur Verankerung dienende, rohrförmige Gründungspfähle großen Durchmessers auf. Wenn nun die mittels einer Bohrinsel ausgebeutete Lagerstätte erschöpft ist, wird die am Meeresboden verankerte Bohr- oder Förderinsel nutzlos und vielfach zu einem störenden Hindernis für die Schiffahrt, das beseitigt werden muß. Auch bei anderen Meeres-, Küsten-oder Landbauwerken ist es für Umbauzwecke oder zu deren Beseitigung oft erforderlich, dickwandige rohrförmige Bauwerksteile sehr großen Durchmessers oder großkalibrige Gründungspfähle zu durchtrennen. Bei Wasserbauwerken muß diese Abtrennung oft möglichst dicht über dem Meeres- oder Gewässerboden vorgenommen werden, um auch unter Wasser störende Hindernisse möglichst zu beseitigen.

Aus der FR-A 2 349 787 ist eine Trennvorrichung zum Durchtrennen von rohrförmigen Bauwerksteilen bekannt, bei der zwei an den Enden eines horizontal hängenden Rahmens angebrachte Zangen so auf den Meeresboden abgesenkt werden, daß sie das abzutrennende Rohr umgreifen können. Zwischen der zangenförmigen Greifelementen ist eine aus zwei halbkreisförmigen Segmenten bestehender Ring angeordnet, der durch geeignete Antriebe um das Rohr gelegt wird. Jedes Segment trägt eine Schneid- oder Trennvorrichtung mittels eines angetriebenen Ritzels, das in eine entsprechende Außenverzahnung der Segmente eingreift. Die Segmente werden zusammen mit den daran befestigten Schneid- oder Trennvorrichtungen um das Rohr verdreht.

Diese bekannte Trennvorrichtung kann jedoch nur zum Trennen von im wesentlichen horizontal liegenden rohrförmigen Bauteilen verwendet werden. Zum Abtrennen von Bohrinselbeinen ist sie ungeeignet. Die Verzahnung der Segmente kann an der Trennstelle bei Versatz der beiden schwenkbaren Hälften bzw. durch Spiel und Verschleiß in den Schwenkelementen oder bei unvollkommenem Schließen der Hälften an dieser Stelle nicht mehr überfahren werden.

Fernkontrolliertes Arbeiten ist mit dieser Vorrichtung nicht betriebssicher möglich.

Es ist auch bekannt, großkalibrige Stahlrohre mittels einer Druckwasser-Schneidvorrichtung zu durchtrennen, mit welcher ein aus einer Düse austretender, Abrasivmittel enthaltender Druckwasserstrahl auf die zu durchtrennende Rohrwand gerichtet wird. Diese Druckwasser-Schneidvorrichtung wird mittels eines an der äußeren Rohrwand in Umfangsrichtung verfahrbaren Wagens mit um das Rohr herumgespannten Führungsketten, die mit Kettenrädern auf den Radachsen des Wagens in Eingriff stehen, entsprechend der Schnittgeschwindigkeit bewegt. Diese Anordnung muß jedoch jeweils von Hand neben der zu durchtrennenden Zone am Rohr angebracht werden und eignet sich daher nicht zum Abtrennen von Bohrinselbeinen und großkalibrigen Gründungspfählen unter Wasser.

Aufgabe der Erfindung ist es nun, eine Trennvorrichtung zum Durchtrennen von senkrecht oder geneigt stehenden rohrförmigen Bauwerksteilen der eingangs genannten Art zu schaffen, die bei robuster Konstruktion ein leichtes Positionieren der Trennvorrichtung und störungsarmes Durchtrennen von großkalibrigen rohrförmigen Bauwerksteilen großer Wandstärke auch in großer Wassertiefe ermöglicht.

Zur Lösung dieser Aufgabe ist die Trennvorrichtung der eingangs genannten Art erfindungsgemäß mit den Merkmalen des Patentanspruchs 1 ausgestattet.

Diese Trennvorrichtung kann am Kranseil eines Arbeitsschiffes hängend an jeden gewünschten Bereich eines Bohrinselbeines, einer Querstrebe oder eines Gründungspfahles angelegt und durch ihre Antriebsvorrichtungen um diesen herum festgelegt werden. Sie kann je nach der Materialbeschaffenheit, dem Schichtaufbau und der Wandstärke der zu durchtrennenden Rohrwand wahlweise mit einer Druckwasser-Schneidvorrichtung, einer spanabhebenden Schneidvorrichtung oder einer Brennschneidvorrichtung ausgestattet sein und beispielsweise zum Abtrennen eines Bohrinselbeines dicht über dem Meeresboden nach dem Absenken am Kranseil durch Betätigung der beweglichen Tragarme ohne Taucherhilfe am Bohrinselbein festgelegt werden, worauf dessen Wandung durch ein oder mehrere jeweils auf einem in der Führungsbahn eines Tragarms in Umfangsrichtung verfahrbare Schneidvorrichtungen in wenigen Stunden sauber durchtrennt wird. Die Bewegungen der Tragarme und der auf diesen in Umfangsrichtung geführten Tragsegmente sowie die Zufuhr von Druckwasser, Brenngas oder Antriebsenergie zur eigentlichen Schneidvorrichtung können dabei über Wasser ferngesteuert werden. Die Überwachung kann dabei durch Unterwasserkameras erfolgen.

Vorteilhafte weitere Ausgestaltungen der Trennvorrichtung sind in den Unteransprüchen beschrieben.

Im folgenden werden bevorzugte Ausführungsformen der Trennvorrichtung unter Bezugnahme auf die beigefügten Zeichnungen weiter erläutert. Es zeigen:

Fig. 1 - eine schematische Seitenansicht der an einen Unterwasser-Gründungspfahl angelegten Trennvorrichtung,

Fig. 2 - eine schematische Aufsicht auf die Tragarme der Trennvorrichtung gemäß Fig. 1 in der Offenstellung,

Fig. 3 - eine schematische Aufsicht auf die Trennarme der Trennvorrichtung gemäß der Fig. 1 und 2 in der Schließstellung,

Fig. 4 - eine schematische Aufsicht auf die Trennarme gemäß Fig. 3 mit ausgefahrenem Tragsegment,

Fig. 5 - einen schematischen Längsschnitt durch die Tragarme gemäß Fig. 4 längs der Linie V - V der Fig. 4,

Fig. 6 - eine schematische Aufsicht auf die Tragarme einer abgewandelten Trennvorrichtung in der Offenstellung und

Fig. 7 - eine schematische Seitenansicht der zusammenwirkenden Endabschnitte der Tragarme gemäß Fig. 6.

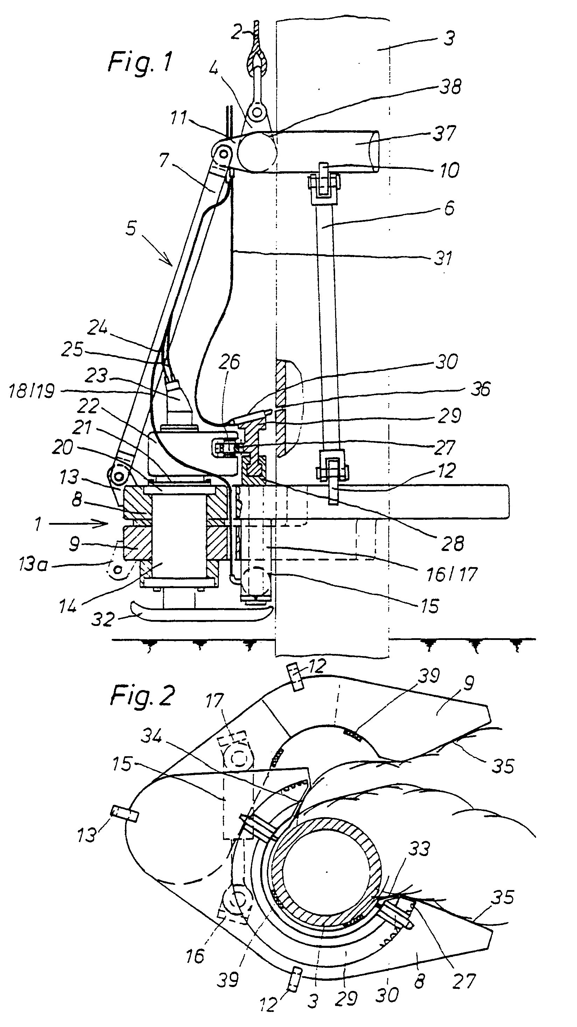

Die in Fig. 1 dargestellte Trennvorrichtung 1 umfaßt eine Tragstruktur 5 mit einem am Kranseil 2 eines Arbeitsschiffes hängend angebrachten Tragjoch 4 und zwei um einen gemeinsamen Drehzapfen 14 relativ zueinander verschwenkbaren Tragarmen 8 und 9, die mit dem Tragjoch 4 über beidendig schwenkbar angelenkte Tragstreben 6 und 7 verbunden sind. Das in der Aufsicht etwa U-förmige Tragjoch 4 besitzt zwei seitliche Stützarme 37 und ein rohrförmiges Querstück 38, das in der dargestellten Position gegen das Fußende eines auf dem Meeresboden abgestützten, rohrförmigen Bohrinselbeines 3 angelegt ist. Die Eigengewichte des Tragjochs 4, der Stützstreben 6 und 7 sowie der Tragarme 8 und 9 und der mit diesen verbundenen, weiter unten beschriebenen Vorrichtungen sind so ausgelegt, daß sich die Trennvorrichtung 1 in dieser Stellung des Tragjochs 4 unter ihrem eigenen Gewicht gegen das Bohrinselbein 3 anzulegen sucht.

Die seitlichen Tragstreben 6 sind jeweils an ihrem oberen Ende an einer Befestigungslasche 10 des Stützarms 37 und an ihrem unteren Ende an einer Befestigungslasche 12 des zugeordneten Tragarms 8 bzw. 9 schwenkbar angelenkt. Die Tragstrebe 7 ist in entsprechender Weise an ihrem oberen Ende an einer Befestigungslasche 11 des Querstücks 38 und an ihrem unteren Ende an einer Befestigungslasche 13 des Tragarms 8 angelenkt. Zum Verschwenken der Tragstrebe 7 relativ zum Tragjoch 4 kann zweckmäßig zusätzlich ein nicht dargestellter, am Tragjoch 4 bzw. an der Tragstrebe 7 angelenkter Hydraulikzylinder vorgesehen sein, dessen Kolbenstange an der Tragstrebe 7 bzw. am Tragjoch 4 schwenkbar angelenkt ist. Mit Hilfe eines solchen Hydraulikzylinders kann die Tragstruktur 5 auch an ein schräg geneigt verlaufendes Bohrinselbein angelegt werden. Am Tragarm 9 kann ferner zusätzlich eine weitere Befestigungslasche 13a vorgesehen sein, um die Tragstruktur unter Zuhilfenahme eines zweiten Kranseiles auch an im wesentlichen horizontal verlaufende Bauwerksteile anlegen zu können. Die Befestigungslaschen 10 bis 13 sind vorzugsweise mit nicht dargestellten Gelenklagern versehen, die ein begrenztes Verschwenken der Tragstreben 6 und 7 quer zu den zugeordneten Befestigungslaschen zulassen.

Der die Tragarme 8 und 9 zur praktisch spielfreien Verschwenkung verbindende Drehzapfen 14 besitzt einen mit dem oberen Tragarm 8 lösbar verschraubten Endflansch 20, einen unteren Ringflansch zur Abstützung des unteren Tragarms 9 sowie eine an seinem unteren Ende angeordnete Bodenplatte 32 mit kufenartig hochgewölbtem Außenrand. Zwischen den einander zugewandten Flächen der den Drehzapfen 14 umgebenden Endabschnitte der Tragarme 8 und 9 ist ein nicht dargestelltes Wälzlager angeordnet. Auf den oberen Endflansch 20 des Drehzapfens 14 ist ferner der untere Halterungsflansch 21 eines Getriebekastens 22 aufgeschraubt, der an seiner Oberseite einen Hydraulikmotor 23 trägt, der über eine Druckmittelzuleitung 24 und eine Druckmittelableitung 25 mit einer über Wasser angeordneten Hydraulikpumpe bzw. einem Druckmitteltank verbunden ist. Zum Bewegen der Tragarme 8 und 9 zwischen ihrer Offenstellung und ihrer Schließstellung dient ein unter den Tragarmen 8 und 9 angeordneter Hydraulikzylinder 15, der in einem Schwenklager 17 an der Unterseite des unteren Tragarms angelenkt ist, während seine Kolbenstange mit einem Schwenklager 16 an der Unterseite des oberen Tragarmes 8 verbunden ist. Der Hydraulikzylinder 15 ist über eine Druckmittelzuleitung 18 und eine Druckmittelableitung 19 ebenfalls mit einer über Wasser angeordneten Hydraulikpumpe bzw. einem Druckmittelbehälter verbunden.

Wie Fig. 2 zeigt, besitzt der obere Tragarm 8 eine das Bohrinselbein 3 etwas mehr als zur Hälfte umfassende Ausnehmung mit an deren Innenrand auswechselbar angebrachten, begrenzt elastisch verformbaren Preßstücken 39. An der Oberseite des Tragarmes 8 ist um die Ausnehmung herum eine nach oben offene, beidseitig hinterschnittene kreisbogenförmige Führungsbahn 28 angebracht. In dieser beiderseits der Ausnehmung bis zu an diese angrenzenden, das Einführen des Bohrinselbeins 3 erleichternden Schrägflächen 33 und 34 des Tragarms 8 durchgehenden Führungsbahn 28 ist ein kreisbogenförmiges Tragsegment 29 über nicht dargestellte Rollenlager in Umfangsrichtung verschiebbar geführt. Dieses sich über einen Kreisbogen von etwa 240° erstreckende Tragsegment 29 weist an seiner äußeren Umfangsseite ein Zahnkranzsegment 27 auf, das mit einem im Getriebegehäuse 22 drehbar gelagerten, durch den Hydraulikmotor 23 über ein nicht dargestelltes Untersetzungsgetriebe angetriebenen Ritzel 26 in Eingriff steht.

Der untere Tragarm 9 ist in der Weise gekröpft ausgebildet, daß sein freier Endabschnitt gegenüber dem auf dem Drehzapfen 14 gelagerten Endabschnitt aufwärts versetzt ist und mit seiner Oberseite mit derjenigen des oberen Tragarms 8 fluchtet. Der untere Tragarm 9 besitzt ebenfalls eine kreisbogenförmige Ausnehmung mit an deren Innenrand in Umfangsabständen angeordneten, begrenzt elastisch verformbaren Preßstücken 39. Die freien Enden der Tragarme 8 und 9 sind mit Schrägflächen 35 versehen, die das Einführen des zu umschliessenden Bohrinselbeins 3 oder eines Rohrpfahles erleichtern.

Auf dem kreisbogenförmigen Tragsegment 29 sind zwei sich bezogen auf den Kreisbogen etwa diametral gegenüberliegende Druckwasser-Schneidvorrichtungen 30 angebracht, die jeweils über eine Versorgungsleitung 31 zur Zuführung von Abrasivmittel enthaltendem Druckwasser verbunden sind. Aus der bei der dargestellten Ausführungsform leicht aufwärts gerichteten Strahldüse der Druckwasser-Schneidvorrichtung 30 wird ein gegebenenfalls geeignete Abrasivmittel enthaltender Druckwasserstrahl unter sehr hohem Druck zwischen 300 und 3000 bar gegen die in einem Abstand von wenigen Zentimetern gegenüberliegende Wandung des Bohrinselbeins 3 gerichtet, wodurch in dieser ein scharfer, leicht schräg verlaufender Trennschnitt 36 erzeugt wird. Der auf diese Weise erhaltene, konusförmige Trennschnitt 36 bewirkt, daß die getrennten Teile des Bohrinselbeins 3 auch nach vollständiger Durchtrennung miteinander verzahnt in ihrer vorhergehenden Position verbleiben.

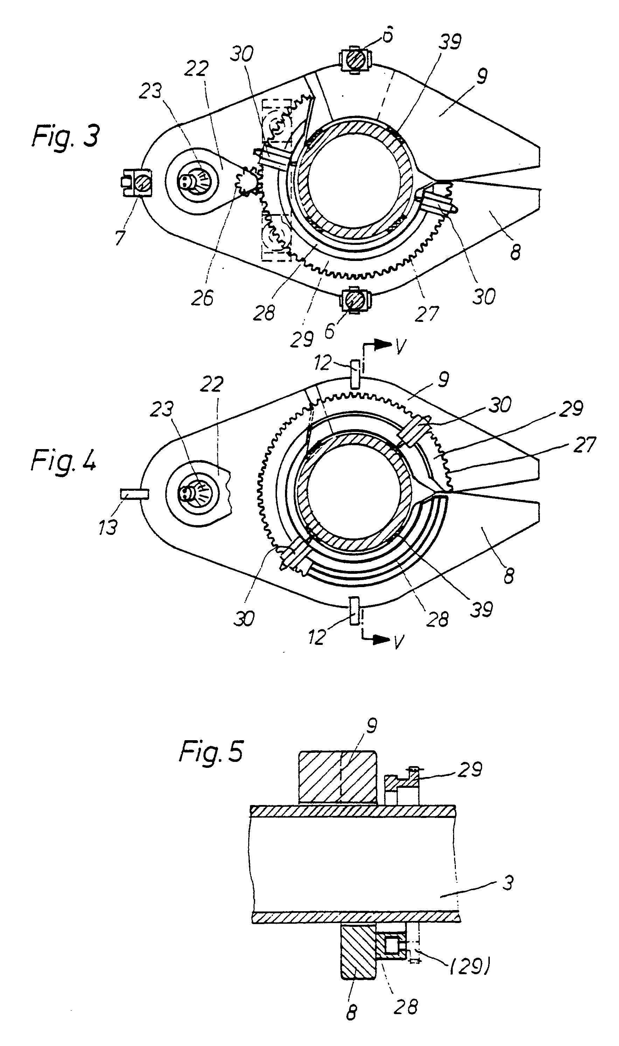

Wie Fig. 4 zeigt, kann das kreisbogenförmige Tragsegment 29 aus der in Fig. 3 dargestellten Ruhestellung durch Verdrehung des Ritzels 26 mittels des Hydraulikmotors 23 einerseits in einer Umfangsrichtung in die in Fig. 4 dargestellte Ausfahrstellung und andererseits auch in der entgegengesetzten Umfangrichtung in eine nicht dargestellte Ausfahrstellung bewegt werden, in welcher die in der Ruhestellung nahe dem freien Ende des Tragarms 8 befindliche Druckwasser-Schneidvorrichtung 30 entgegen dem Uhrzeigersinn in eine Stellung gelangt, welche der in Fig. 4 dargestellten Stellung der anderen Druckwasser-Schneidvorrichtung 30 entspricht. Auf diese Weise können die beiden Druckwasser-Schneidvorrichtungen 30 bei einmaliger, mit auf die Schneidegeschwindigkeit abgestimmter Winkelgeschwindigkeit erfolgender Verschiebung des kreisbogenförmigen Tragsegments 29 über die ganze Bogenlänge seines Zahnkranzsegments 27 die Rohrwand des abzutrennenden Bohrinselbeins 3 über dessen ganzen Umfang durchtrennen.

Wie aus Fig. 5 zu ersehen ist, liegt das aus der Führungsbahn 28 in Umfangsrichtung in die in Fig. 4 dargestellte Ausfahrstellung bewegte, kreisbogenförmige Tragsegment 29 in geringem Abstand berührungsfrei über der Oberfläche des aufwärts gekröpften Endabschnitts des Tragarmes 9, so daß etwaige durch rauhe Handhabung und bei Off-Shore-Arbeiten unvermeidliche Stöße entstandene Unebenheiten an den Oberflächen der Tragarme 8 und 9 eine der Schnittgeschwindigkeit der Schneidvorrichtung 30 entsprechende gleichmäßige langsame Verschiebung des Tragsegments 29 nicht behindern können. Je nach den Anforderungen kann jedoch an der gekröpften Oberseite des unteren Tragarmes 9 ebenfalls eine geeignete, gegen Beschädigungen geschützte Führung für das Tragsegment 29 vorgesehen sein.

Wenn die in den Fig. 1 bis 4 dargestellte Trennvorrichtung zum Abtrennen eines Bohrinselbeins 3 oder eines entsprechenden rohrförmigen Bauwerksteils benutzt werden soll, wird die Tragstruktur 5 am Kranseil 2 eines Arbeitsschiffes mit in die Offenstellung bewegten Tragarmen 8 und 9 so an den zu durchtrennenden Abschnitt des Bohrinselbeins 3 heranbewegt, daß dieser durch den von den Schrägflächen 35 begrenzten Zwischenraum zwischen den Tragarmen 8 und 9 in die Ausnehmung des oberen Tragarmes 8 hineingelangt, während gleichzeitig das Tragjoch 4 mit seinem Querstück 38 so an das Bohrinselbein 3 angelegt wird, daß dieses von seinen seitlichen Stützarmen 37 umfaßt wird. In dieser Stellung wird durch Betätigung des Hydraulikzylinders 15 der untere Tragarm 9 aus der in Fig. 2 dargestellten Offenstellung in die in Fig. 3 dargestellte Schließstellung verschwenkt, wobei die am Innenrand der Ausnehmungen der Tragarme 8 und 9 angeordneten, begrenzt elastisch verformbaren Preßstücke 39 an der Außenwand des Bohrinselbeins 3 zur Anlage kommen und bei Erreichen der Schließstellung unter hinreichender elastischer Verformung so fest gegen das Bohrinselbein 3 angepreßt werden, daß die Trennvorrichtung an diesem im Reibsitz zuverlässig festgelegt ist. Zur Anpassung an rohrförmige Bauwerksteile unterschiedlichen Durchmessers können die in den Ausnehmungen der Tragarme 8 und 9 auswechselbar angebrachten Preßteile 39 gegen solche mit anderen Abmessungen ausgetauscht werden. Zur Anpassung an Bauwerksteile mit sehr viel kleinerem Durchmesser können in den Ausnehmungen der Tragarme 8 und 9 auch mit auswechselbaren Preßteilen 39 versehene, halbringförmige Einsatzstücke lösbar befestigt werden.

Wenn nun die Tragstruktur mit in die Schließstellung bewegten Tragarmen 8 und 9 über die Preßteile 39 im Reibsitz am umschlossenen Bohrinselbein 3 festgelegt ist, wird das Tragsegment 29 zunächst durch den Hydraulikmotor 23 über das von diesem angetriebene Ritzel 26 und das mit diesem in Eingriff stehende Zahnkranzsegment 27 mit hoher Geschwindigkeit in seine in Fig. 4 dargestellte Ausfahrstellung (oder aber in entgegengesetzter Richtung in die entsprechende Ausfahrstellung) bewegt und dann die Druckwasser-Schneidvorrichtung 30 durch Zuführung von Abrasivmittel enthaltendem Druckwasser über die Versorgungsleitung 31 in Tätigkeit gesetzt. Der von der Druckwasser-Schneidvorrichtung 30 erzeugte Druckwasserstrahl erzeugt in der der Strahldüse in einem Abstand von wenigen Zentimetern gegenüberliegenden Wandung des Bohrinselbeins 3 zunächst ein Loch. Dann wird das Ritzel 26 vom Hydraulikmotor 23 über das im Getriebekasten 22 enthaltene Untersetzungsgetriebe so angetrieben, daß sich das kreisbogenförmige Tragsegment und damit die mit diesem fest verbundenen Druckwasser-Schneidvorrichtungen mit solcher Geschwindigkeit in Umfangsrichtung verschieben, daß ausgehend von dem zunächst in der Rohrwand des Bohrinselbeins 3 erzeugten Loch ein schmaler, scharfer Trennschnitt 36 entsteht.

Die Bewegungsgeschwindigkeit des Tragsegments 29 muß dabei natürlich so eingestellt werden, daß der Druckwasserstrahl für eine zur Erzeugung eines Trennschnitts der gewünschten Tiefe hinreichende Zeit auf die gleiche Stelle der Rohrwand gerichtet bleibt. Die Verdrehungsgeschwindigkeit des Tragsegments 29 muß mit anderen Worten der Geschwindigkeit angepaßt werden, mit welcher der Druckwasserstrahl die Rohrwand bis zu der gewünschten Tiefe durchtrennen kann.

Wenn das Tragsegment 29 mit den Druckwasser-Schneidvorrichtungen 30 dann aus der in Fig. 4 dargestellten Ausfahrstellung über die in Fig. 3 dargestellte Ruhestellung bis in die entgegengesetzte Ausfahrstellung bewegt worden ist, haben die beiden Druckwasser-Schneidvorrichtungen 30 die Rohrwandung des Bohrinselbeins 3 über dessen vollen Umfang durchtrennt. Anschließend wird der untere Tragarm 9 durch Betätigung des Hydraulikzylinders 15 in die in Fig. 2 dargestellte Offenstellung verschwenkt und die Trennvorrichtung 1 mittels des Kranseils 2 vom abgetrennten Bohrinselbein 3 fortbewegt.

Wenn das Durchtrennen des Bohrinselbeins 3 möglichst dicht über dem Meeresboden erfolgen soll, kann die Tragstruktur 5 mit ihrer Bodenplatte 32 bis auf den Meeresboden abgesenkt werden, wobei die Bodenplatte 32 gleichzeitig die darüberliegenden Vorrichtungen gegen Beschädigungen schützt. Da es in solchen Fällen meist erwünscht ist, den Trennschnitt 36 so dicht wie möglich über dem Meeresboden anzubringen, kann der Hydraulikzylinder 15 auch an der Oberseite der Tragarme 8 und 9 angeordnet sein, während die Führungsbahn 28, das kreisbogenförmige Tragsegment 29 sowie die Druckwasser-Schneidvorrichtungen 30 spiegelbildlich zu der in Fig. 1 dargestellten Anordnung an der Unterseite des unteren Tragarmes angebracht sein können. Diese Anordnung hat gleichzeitig den Vorteil, daß die mit dem Druckwasserstrahl austretenden Abrasivmittel nicht so leicht in die Führungsbahn 28 bzw. das Zahnkranzsegment 27 gelangen können.

Da die kreisbogenförmige Führungsbahn 28 und das darin verschiebbare, kreisbogenförmige Tragsegment zur Erzielung einer möglichst spielfreien Führung des Tragsegments 29 in seiner Ausfahrstellung sich jeweils über einen möglichst großen Kreisbogen erstrecken sollen, andererseits aber die Form der Tragarme 8 und 9 sowie der in diesen vorgesehenen Ausnehmungen ein möglichst leichtes Einführen des Bohrinselbeins 3 ermöglichen sollen und das Tragsegment 29 in seiner Ruhestellung zur Vermeidung von Beschädigungen durch Stöße etc. möglichst auch nicht in Umfangsrichtung über die Führungsbahn 28 hinaus vorstehen soll, sind die Enden des Tragsegments 29 zweckmäßig in einer den Schrägflächen 33 und 34 des Tragarms 8 entsprechenden Weise abgeschrägt und das Zahnkranzsegment 27 am äußeren Umfangsrand des Tragsegments angebracht. Auf diese Weise bleibt das Tragsegment 29 auch in der in Fig. 4 dargestellten, bis zu einem nicht dargestellten Anschlag in Umfangsrichtung verschobenen Ausfahrstellung noch mit mehr als der Hälfte seiner Kreisbogenlänge in der Führungsbahn 28 geführt.

Die Schneidvorrichtungen 30 sollen auf dem Tragsegment 29 möglichst so angebracht sein, daß sie beim Einführen des zu durchtrennenden Bauwerksteils 3 zwischen die Tragarme 8 und 9 gegen Beschädigungen möglichst geschützt sind. Hierzu kann auch die Strahldüse der Druckwasser-Schneidvorrichtung 30 durch eine geeignete, nicht dargestellte Stellvorrichtung in radialer Richtung zum tragsegment 29 begrenzt verschiebbar sein, wodurch gleichzeitig auch der Abstand der Strahldüse von der zu durchtrennenden Rohrwand verstellbar ist. Eine solche Stellvorrichtung kann auch durch einen Zweigstrom des über die Versorgungsleitung 31 zugeführten Druckwassers betätigt werden.

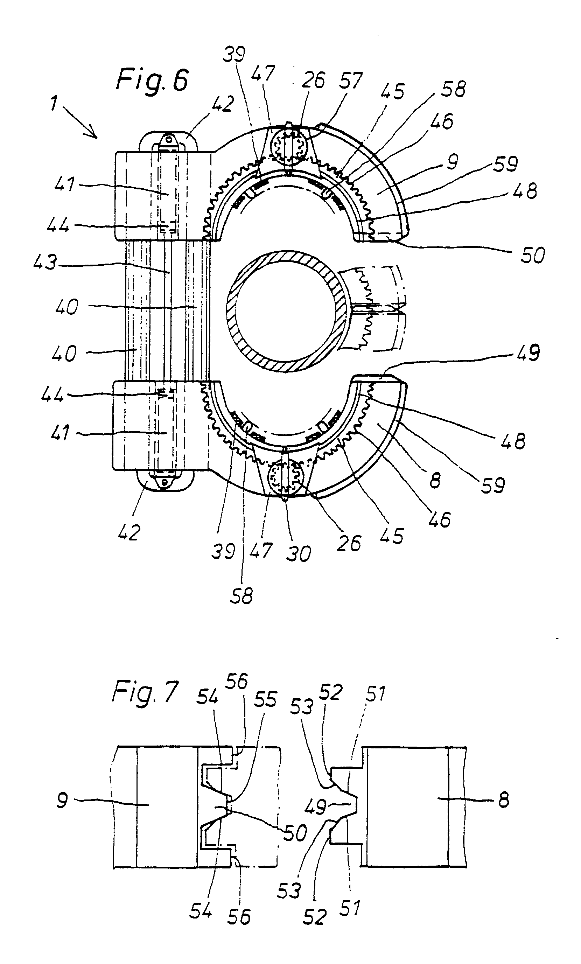

Bei der in den Fig. 6 und 7 dargestellten Trennvorrichtung sind die im wesentlichen spiegelsymmetrisch ausgebildeten Tragarme 8 und 9 jeweils auf zwei parallel verlaufenden Führungsstangen 40 zwischen der in ausgezogenen Linien dargestellten Offenstellung und der gestrichelt angedeuteten Schließstellung verschiebbar. Jeder Tragarm 8 und 9 ist mit einem an einem Lagerteil 42 angebrachten, zwischen den Führungsstangen 40 liegenden Hydraulikzylinder 41 versehen, deren Kolben 44 durch eine gemeinsame Kolbenstange 43 verbunden sind. Durch Einführung gleicher Druckmittelmengen in die die Kolbenstange enthaltenden Kammern der Hydraulikzylinder 41 können die Tragarme 8 und 9 aus der in Fig. 6 dargestellten Offenstellung in ihre Schließstellung bewegt werden. Zur Bewegung in die Offenstellung erfolgt die Druckmittelzufuhr zu den jeweils anderen Zylinderkammern der Hydraulikzylinder 41.

An der Oberseite jedes Tragarms ist ein sich über einen Kreisbogen von 180° erstreckendes Zahnkranzsegment 45 angebracht, in dessen Verzahnung 46 ein in einem Tragsegment 47 gelagertes Ritzel 26 eingreift. Jedes Tragsegment 47 ist in einer am Zahnkranzsegment 45 angeordneten Führungsbahn 48 verschiebbar geführt und trägt ferner einen vorzugsweise druckmittelbetätigten Antriebsmotor 57 zur Verdrehung des Ritzels 26 und damit zur Verschiebung des Tragsegments 47 relativ zur Verzahnung 46.

An den freien Endabschnitten der Tragarme 8 und 9 sind ferner in der Schließstellung miteinander abstützend in Eingriff tretende Verriegelungselemente vorgesehen, durch die selbst nach einer gewissen Abnutzung der Führungsstangen 40 die Tragarme 8 und 9 in ihrer Schließstellung so miteinander verriegelt werden, daß deren Führungsbahnen 48 und deren Verzahnungen 46 in der Schließstellung miteinander genau fluchten und somit die beiden Tragsegmente 47 störungsfrei auch über die Nahtstellen zwischen den beiden Tragarmen 8 und 9 verfahren werden können. Hierzu ist am freien Ende des Tragarmes 8 eine mit schrägen seitlichen Aufgleitflächen 51 versehene Verriegelungsnut 49 versehen, während der andere Tragarm 9 einen in der Schließstellung in die Verriegelungsnut 49 passend eingreifenden Verriegelungsvorsprung 50 mit schrägen Aufgleitflächen 54 aufweist. Die schrägen Aufgleitflächen 51 und 54 sind jeweils gegenüber den Stirnflächen 52 bzw. 56 der Tragarme 8 bzw. 9 etwas zurückversetzt, damit das Bohrinselbein 3 beim Einführen zwischen die Tragarme 8 und 9 nur an den robusten Stirnflächen 52 und 56 entlanggleitet und keine Beschädigungen des Verriegelungsvorsprunges 50 sowie der an diesem bzw. in der Verriegelungsnut 49 vorgesehenen schrägen Aufgleitflächen 54 bzw. 51 bewirken kann. Bei der Bewegung der Tragarme 8 und 9 in ihre Schließstellung wird der Verriegelungsvorsprung 50 über seine mit den schrägen Aufgleitflächen der Verriegelungsausnehmung 49 zusammenwirkenden Aufgleitflächen 54 in die in fig. 7 gestrichelt dargestellte Eingriffstellung geführt. Zwischen den Aufgleitflächen 51 und den Stirnflächen 52 sind noch stärker abgeschrägte oder gewölbte Zwischenflächen 53 vorgesehen, die ebenfalls dazu beitragen, den Verriegelungsvorsprung 50 störungsfrei in die gestrichelt dargestellte Eingriffstellung zu führen.

In den das abzutrennende Bauwerksteil 3 aufnehmenden Ausnehmungen der Tragarme 8 und 9 sind ferner jeweils zwischen zwei benachbarten Preßteilen 39 über diese hinaus vorstehende Führungsrollen 58 vorgesehen, die jeweils um eine im wesentlichen quer zum Ausnehmungsradius verlaufende Drehachse verdrehbar und außerdem gegen die Kraft einer nicht dargestellten, vorgespannten Federvorrichtung radial auswärts zurückdrängbar sind. Wenn die Tragarme 8 und 9 in ihre Schließstellung bewegt werden, legen sich zunächst die Führungsrollen 58 an die äußere Umfangsfläche des rohrförmigen Bauteils 3 an. In dieser Stellung, in der die Preßteile 39 das Bauwerksteil 3 noch nicht berühren, kann die Trennvorrichtung 1 am rohrförmigen Bauwerksteil 3 in dessen Längsrichtung verfahren werden. Dabei kann durch Betätigen der verfahrbaren Druckwasser-Schneidvorrichtungen 30 mit vermindertem Strahldruck oder an den Tragarmen 8 und 9 zusätzlich angebrachter, mit Druckwasser oder mechanisch betriebener Reinigungsvorrichtungen der zu bearbeitende Bereich des rohrförmigen Bauwerksteils 3 von störendem Bewuchs und/oder korrosionsschützenden Beschichtungen befreit werden. Nach Durchführung der Reinigung werden die Tragarme 8 und 9 dann vollends in ihre Schließstellung bewegt, wobei durch die Schließkraft der Hydraulikzylinder 41 die Führungsrollen 58 soweit zurückgedrängt werden, daß die Preßteile 39 unter elastischer Verformung gegen das Bauwerksteil 3 angepreßt werden und die Trennvorrichtung 1 im Reibsitz festgelegt ist. Durch die verkürzte Ausbildung der freien Endabschnitte der Tragarme 8 und 9 kann die Vorrichtung auch zur Bearbeitung von auf oder im Meeresboden liegenden rohrförmigen Bauwerksteilen eingesetzt werden. Hierzu braucht lediglich der Meeresboden unter dem liegenden Bauwerksteil soweit entfernt zu werden, daß die verkürzten Endabschnitte der Tragarme 8 und 9 das Bauwerksteil 3 voll umschließen können. Zum Schutz der Verzahnung 46, der Tragsegmente 47 und der Schneidvorrichtung 30 ist bei dieser Ausführungsform an den Endabschnitten der Tragarme 8 und 9 jeweils ein Abdeckschild 59 vorgesehen.

Die in den Fig. 6 und 7 dargestellte Ausführungsform der Trennvorrichtung besitzt ferner ebenfalls an den Tragarmen 8 bzw. 9 jeweils schwenkbar angelenkte Tragstreben 6 und 7 und ein mit diesen schwenkbar verbundenes Tragjoch der in Fig. 1 dargestellten Art. Ihre Betätigung entspricht der vorstehend zu den Fig. 1 bis 5 gegebenen Beschreibung, wobei jedoch jetzt das Öffnen und Schließen der Tragarme 8 und 9 durch deren Verschiebung mittels der Hydraulikzylinder 41 erfolgt und die Tragsegmente 47 in der Schließstellung der Tragarme 8 und 9 jeweils unabhängig voneinander durch Verdrehung der mit der zugeordneten Verzahnung 46 in Eingriff stehenden Ritzel 26 mittels eines Antriebsmotors 57 entsprechend der erzielbaren Schneidgeschwindigkeit der auf dem Tragsegment 47 angeordneten Druckwasser-Schneidvorrichtung 30 in Umfangsrichtung auch über die Nahtstelle der Verzahnung 46 und der Führungsbahn 48 verschoben werden. In der Schließstellung wird die Trennvorrichtung wiederum durch die von den Hydraulikzylindern 41 gegen die Außenfläche des zu durchtrennenden rohrförmigen Bauwerksteils 3 angepreßten, begrenzt elastisch verformbaren Preßstücke 39 im Reibsitz festgelegt gehalten.

An Stelle der bei den dargestellten Ausführungsformen verwendeten Druckwasser-Schneidvorrichtungen 30 können je nach der Materialbeschaffenheit, der Wandstärke und eines etwaigen Schichtaufbaus der zu durchtrennenden Rohrwand stattdessen oder zusätzlich auch herkömmliche spanabhebende Schneidwerkzeuge und/oder Brennschneidvorrichtungen verwendet werden.

Die vorstehend an Hand bevorzugter Ausführungsformen erläuterte Trennvorrichtung kann vom Fachmann je nach den Anforderungen des Einzelfalles in verschiedener Weise zweckentsprechend abgewandelt werden, sofern dabei zwischen einer Offenstellung und einer Schließstellung bewegliche Tragarme mit mindestens einem in einer kreisbogenförmigen Führungsbahn eines Tragarms kreisbogenförmig verfahrbares Tragsegment für mindestens eine Schneid- oder Brennvorrichtung benutzt wird.

**Patentansprüche**

1. Trennvorrichtung zum Durchtrennen von rohrförmigen Bauwerksteilen, insbesondere Bohrinselbeinen oder großkalibrigen Rohrpfählen, mit mindestens einer Schneid- oder Brennvorrichtung zur Einwirkung auf die Umfangsfläche des zu durchtrennenden Bauwerkteiles, einer an einem beweglichen Tragelement hängend anbringbaren Tragstruktur mit zwei zwischen einer die Einführung des abzutrennenden rohrförmigen Bauwerkteils zulassenden Offenstellung und einer das Bauwerkteil zangenartig umgreifenden Schließstellung beweglichen Tragarmen (8,9), mindestens einer an einem Tragarm angeordneten, in der Schließstellung zu einem umschlossenen rohrförmigen Bauteil im wesentlichen konzentrisch verlaufenden, kreisbogenförmigen Führungsbahn (28), mindestens einem in der Führungsbahn in deren Kreisbogenrichtung beweglich geführten Tragsegment (29) für mindestens eine Schneid- und/oder Brennvorrichtung (30) und kraftbetätigten Antriebsvorrichtungen (15) zur Bewegung der Tragarme und jedes Tragsegments, **gekennzeichnet durch** ein von den Tragarmen (8, 9) in axialer Richtung des rohrförmigen Bauwerksteils (3) beabstandetes und an dieses anzulegendes Tragjoch (4) und mehrere jeweils an diesem und einem zugeordneten Tragarm (8 bzw. 9) beabstandet schwenkbar gelenkte Tragstreben (6, 7) sowie gegebenenfalls druckmittelbetätigte Stellvorrichtungen zur teleskopartigen Verlängerung mindestens einer Tragstrebe (7) und/oder zu deren Verschwenkung relativ zum Tragjoch (4) bzw. den Tragarmen (8, 9).

2. Vorrichtung nach Anspruch 1, **dadurch gekennzeichnet,** daß in mindestens einer Führungsbahn (28) jeweils ein im wesentlichen kreisbogenförmiges Tragsegment (29) zwischen einer in dessen Umfangsrichtung über den zugeordneten Tragarm (8) nicht wesentlich vorstehenden Ruhestellung und in Umfangsrichtung über den zugeordneten Tragarm (8) kreisbogenförmig hinausragenden Ausfahrstellungen beweglich geführt ist.

3. Vorrichtung nach Anspruch 2, **dadurch gekennzeichnet,** daß mindestens ein Tragsegment (29) bei in der Schließstellung der Tragarme (8, 9) erfolgender Bewegung in seine Ausfahrstellungen auf dem jeweils anderen Tragarm (9) abstützend geführt ist.

4. Vorrichtung nach einem der Ansprüche 1 bis 3, **dadurch gekennzeichnet,** daß die Endabschnitte der Tragarme (8, 9) in deren Schließstellung miteinander in Eingriff tretende Ausrichtelemente (50, 51) aufweisen.

5. Vorrichtung nach einem der Ansprüche 1 bis 4, **dadurch gekennzeichnet,** daß die Tragarme (8, 9) relativ zueinander um einen gemeinsamen Drehzapfen (14) verschwenkbar sind.

6. Vorrichtung nach einem der Ansprüche 1 bis 4, **dadurch gekennzeichnet,** daß die Tragarme (8, 9) relativ Zueinander längs mindestens eines geraden oder gekrümmten Führungselements (40) zwischen der Schließstellung und der Offenstellung verschiebbar sind.

7. Vorrichtung nach einem der Ansprüche 1 bis 6, **dadurch gekennzeichnet,** daß das Tragsegment (29) einen Umfangsabschnitt überdeckt, der größer als der durch die Anzahl schneid- oder Brennvorrichtungen geteilte Gesamtumfang ist.

8. Vorrichtung nach einem der Ansprüche 1 bis 7, **dadurch gekennzeichnet,** daß in mindestens einer Führungsbahn (28) ein Tragsegment (29) über ein an diesem oder am zugeordneten Tragarm (8) angeordnetes, mit einem Ritzel (26) in Eingriff stehendes Zahnkranzsegment (27) verschiebbar geführt ist.

9. Vorrichtung nach einem der Ansprüche 1 bis 8, **gekennzeichnet durch** an den Tragarmen (8, 9) in Umfangsabständen vorzugsweise abwechselbar angeordnete, in deren Schließstellung gegen die äußere Umfangsfläche des abzutrennenden Bauwerkteils (3) im Reibsitz fest andrückbare, vorzugsweise begrenzt elastisch verformbare Preßteile (39) zur lösbaren Festlegung der Trennvorrichtung (1) am abzutrennenden Bauwerkteil (3).

10. Vorrichtung nach Anspruch 9, **dadurch gekennzeichnet,** daß durch zugeordnete Druckmittelzylinder gegen die Umfangsfläche des abzutrennenden Bauwerkteils (3) andrückbare Preßteile vorgesehen sind.

11. Vorrichtung nach einem der Ansprüche 1 bis 10, **gekennzeichnet durch** mindestens eine mit Druckwasser-Zuleitung verbundene, mit einem Tragsegment (29) oder relativ zu diesem in Umfangsrichtung des abzutrennenden Bauwerkteils (3) verfahrbare Druckwasser-Schneidvorrichtung (30) mit einer Strahldüse zur Erzeugung eines gegen die Wandung des Bauwerkteils (3) gerichteten, gegebenenfalls Abrasivmaterial enthaltenden Druckwasserstrahls.

12. Vorrichtung nach einem der Ansprüche 1 bis 11, **dadurch gekennzeichnet,** daß die Tragarme (8, 9) jeweils eine vorzugsweise im wesentlichen halbkreisförmige Ausnehmung zur Aufnahme des abzutrennenden Bauwerkteils (3) aufweisen und zur Anpassung des Ausnehmungsdurchmessers auf das abzutrennende Bauwerkselement (3) an den Tragarmen (8, 9) auswechselbar anzubringende, halbringartige Einsatzstücke mit oder ohne Preßteile (39) vorgesehen sind.

13. Vorrichtung nach einem der Ansprüche 1 bis 12, **dadurch gekennzeichnet,** daß an den in der Schließstellung dem umschlossenen rohrförmigen Bauwerksteil (3) zugewandten Innenrandbereichen der Tragarme (8, 9) sich bei deren Schließbewegung zuerst an das Bauwerksteil (3) anlegende Führungsrollen (58) zum Verfahren der Trennvorrichtung (1) am Bauwerksteil (3) bei der Weiterbewegung der Tragarme (8, 9) in die Schließstellung gegen eine Federkraft auswärts zurückdrängbar gelagert sind.

14. Vorrichtung nach einem der Ansprüche 1 bis 13, **dadurch gekennzeichnet,** daß an den Tragarmen (8, 9) zusätzlich noch Druckwasserdüsen und/oder mechanische Reinigungswerkzeuge zur flächigen Befreiung eines zu bearbeitenden Bereichs des rohrförmigen Bauwerksteils (3) von Deckschichten und/oder störendem Bewuchs vorgesehen sind.

**Claims**

1. A severing device for severing tubular structural parts, more particularly drilling-rig legs or large-calibre tubular piles, comprising at least one cutting or burning device for acting on the peripheral surface of the structural part to be severed, a bearing structure for attaching and suspending from a movable bearing element and comprising two bearing arms (8, 9) movable between an open position for inserting the tubular structural part to be severed and a closed position surrounding the structural part like tongs, at least one arcuate guide track (28) disposed on a bearing arm and, in the closed position extending substantially concentrically with the tubular component it encloses, at least one bearing segment (29) for at least one cutting and/or burning device (30) and movably guided along the arcuate guide track, and power-actuated drive devices (15) for moving the bearing arms and each bearing segment, characterised by a bearing yoke (4) separated from the bearing arms (8, 9) in the axial direction of the tubular structural part (3) and adapted to be placed on it, a number of bearing struts (6, 7) spaced apart and pivotably guided on the yoke and on an associated bearing arm (8 or 9) and, if required, pressure medium-actuated adjusting devices for telescopic lengthening of at least one bearing strut (7) and/or for pivoting it relative to the bearing yoke (4) or the bearing arms (8, 9).

2. A device according to claim 1, characterised in that in at least one guide track (28), a respective substantially arcuate bearing segment (29) is movably guided between an inoperative position which does not appreciably project in the peripheral direction beyond the associated bearing arm (8), and extended positions which project in arcs beyond the associated bearing arm (8) in the peripheral direction.

3. A device according to claim 2, characterised in that at least one bearing segment (29), during movement in the closed position of the bearing arms (8, 9), is guided into its extended positions when supported on the respective other bearing arm (9).

4. A device according to any of claims 1 to 3, characterised in that the end portions of the bearing arms (8, 9) have aligning elements (50, 51) which come into engagement with one another when the arms are in the closed position.

5. A device according to any of claims 1 to 4, characterised in that the bearing arms (8, 9) are pivotable relative to one another around a common pivot (14).

6. A device according to any of claims 1 to 4, characterised in that the bearing arms (8, 9) are movable relative to one another between the closed position and the open position and along at least one straight or curved guide element (40).

7. A device according to any of claims 1 to 6, characterised in that the bearing segment (29) covers a peripheral portion which is larger than the total periphery divided by the number of cutting or burning devices.

8. A device according to any of claims 1 to 7, characterised in that, in at least one guide track (28), a bearing segment (29) is movably guided via a toothed-wheel segment (27) which is disposed on it or on the associated bearing arm (8) and is in engagement with a pinion (26).

9. A device according to any of claims 1 to 8 characterised by pressure parts (39) for releasably securing the severing device (1) to the structural part (3) to be severed, the pressure parts being disposed preferably alternately at peripheral intervals on the bearing arms (8, 9), adapted to be pressed in friction-tight manner against the outer surface of the part (3) to be severed when in the closed position, and elastically deformable to a limited extent.

10. A device according to claim 9, characterised in that pressure parts are provided and are pressable by associated pressure-medium cylinders against the peripheral surface of the structural part (3) to be severed.

11. A device according to any of claims 1 to 10, characterised by at least one compressed-water cutting device (30) connected to the compressed-water supply pipe, movable with a bearing segment (29) or relative thereto in the peripheral direction of the structural part (3) to be severed, and comprising a nozzle for producing a jet of compressed water directed against the wall of the structural part and optionally containing abrasive material.

12. A device according to any of claims 1 to 11, characterised in that the bearing arms (8, 9) each have a preferably substantially semicircular recess for receiving the structural part (3) to be severed, and semi-annular inserts with or without pressure parts (39) and replaceably attachable to the bearing arms (8, 9) are provided for adjusting the diameter of the recess to the structural part (3) to be severed.

13. A device according to any of claims 1 to 12, characterised in that, on the inner edge regions of the bearing arms (8, 9) which face the enclosed tubular structural part (3) in the closed position, guide rolls (58) which abut the structural part (3) only during the closing motion of the bearing arms are mounted so as to be pressed backwards and outwards against spring force in order to move the severing device (1) on the structural part (3) when the bearing arms (8, 9) move further into the closed position.

14. A device according to any of claims 1 to 13, characterised in that compressed-water nozzles and/or cleaning tools for removing covering layers and/or interfering growth from the surface of a region of the tubular structural part (3) to be processed are additionally provided on the bearing arms (8, 9).

## Revendications

1. Dispositif de coupe pour couper des éléments de construction tubulaires, notamment des pieds de plateforme de forage ou des poteaux tubulaires de fort calibre, avec au moins un dispositif de coupe oude chalumeau s'exerçant sur la périphérie de la pièce de construction, une structure porteuse suspendue applicable sur un élément porteur mobile, avec deux bras porteurs (8, 9) mobiles, entre une position ouverte permettant l'introduction de la pièce de construction tubulaire à sectionner, et une position de fermeture bloquant comme dans une pince, la pièce de construction, avec au moins une piste de guidage (28) disposée sur un bras porteur, en forme d'arc de cercle s'étendant essentiellement concentriquement autour de la pièce de construction tubulaire, en position de fermeture, avec au moins un segment porteur (29) guidé en glissement dans le dispositif en arc de cercle de la piste de guidage, pour au moins un dispositif de coupe et/ou de chalumeau (30) et avec des dispositifs d'entraînement (15) mus par moteur pour déplacer les bras porteurs et chaque segment porteur, caractérisé par un étrier porteur (4) placé à distance des bras porteurs (8, 9) dans le sens axial de la pièce de construction tubulaire (3) et à fixer sur celle-ci et par plusieurs pattes porteuses (6, 7) pivotantes, placées à distance, articulées sur lui et respectivement sur un bras porteur (8 ou 9), correspondant ainsi que le cas échéant, par des dispositifs de positionnement actionnés par pression pour prolonger télescopiquement au moins une patte porteuse (7) et/ou pour l'incliner par rapport à l'étrier porteur (4) ou aux bras porteurs (8, 9).

2. Dispositif selon la revendication 1, caractérisé en ce que dans au moins une piste de guidage (28), il y a un segment porteur essentiellement en arc de cercle (29) guidé et mobile entre une position de repos, ne dépassant par essentiellement le bras porteur (8) dans le sens périphérique et les positions de sortie dépassant dans le sens périphérique en forme d'arc de cercle du bras porteur (8) correspondant.

3. Dispositif selon la revendication 2, caractérisé en ce qu'au moins un segment porteur (29) lors du déplacement ayant lieu en position fermée des bras porteurs (8, 9) est guidé dans ses positions de sortie en appui respectivement sur l'autre bras porteur (9).

4. Dispositif selon l'une des revendications 1 à 3, caractérisé en ce que les extrémités des bras porteurs (8, 9) présentent des éléments d'alignement (50, 51) venant en prise en position fermée.

5. Dispositif selon l'une des revendications 1 à 4, caractérisé en ce que les bras porteurs (8, 9) peuvent pivoter l'un par rapport à l'autre autour d'un axe de rotation commun (14).

6. Dispositif selon l'une des revendications 1 à 4, caractérisé en ce que les bras porteurs (8, 9) peuvent coulisser l'un par rapport à l'autre au moins le long d'un élément de guidage (40) droit ou incurvé entre la position de fermeture et la position d'ouverture.

7. Dispositif selon l'une des revendications 1 à 6, caractérisé en ce que l'élément porteur (29) recouvre un secteur périphérique, qui est plus grand que la périphérie totale divisée par le nombre de dispositifs de coupe ou de chalumeau.

8. Dispositif selon l'une des revendications 1 à 7, caractérisé en ce que dans au moins une piste de guidage (28), on guide par coulissement un segment porteur (29) par l'intermédiaire d'un segment à couronne dentée (27), et disposé sur celui-ci ou sur le bras porteur correspondant (8) en prise avec un pignon (26).

9. Dispositif selon l'une des revendications 1 à 8, caractérisé par des pièces de pression (39) élastiquement déformables, limitées de préférence, placées de manière amovible à distance sur la périphérie, applicables solidement en appui de friction en position de fermeture sur la surface périphérique externe de la pièce de construction (3) à couper, et destinées à positionner de manière démontable le dispositif de coupage (1) sur la pièce de construction à couper (3).

10. Dispositif selon la revendication 9, caractérisé en ce qu'on équipe de vérins appropriés, les pièces de pression applicables sur la surface périphérique de la pièce de construction (3) à couper.

11. Dispositif selon l'une des revendications 1 à 10, caractérisé par au moins un dispositif de coupe (30) à eau sous pression, relié à une conduite d'eau sous pression, pouvant se déplacer avec un segment porteur (29) ou relativement à lui en périphérie de la pièce de construction à couper (3), et comprenant une buse d'éjection pour produire un jet d'eau sous pression comprenant, le cas échéant, un matériau abrasif dirigé contre la paroi de la pièce de construction.

12. Dispositif selon l'une des revendications 1 à 11, caractérisé en ce qu'on équipe les bras porteurs (8, 9) d'un évidement essentiellement en demi-cercle pour recevoir la pièce de construction (3) à couper et avec des pièces d'appui, avec ou sans pièces de pression (39), semi-circulaires et démontables sur les bras porteurs (8, 9) pour adapter le diamètre de l'évidement à la pièce de construction (3) à couper.

13. Dispositif selon l'une des revendications 1 à 12, caractérisé en ce qu'on loge en opposition vers l'extérieur à une force de ressort dans la position fermée, des galets de guidage (58) reposant sur les domaines périphériques internes des bras porteurs (8, 9) tournés en position fermée vers la pièce de construction tubulaire enfermée et pour le déplacement du dispositif de coupe (1) sur la pièce de construction (3) lors du mouvement ultérieur des bras porteurs (8, 9).

14. Dispositif selon l'une des revendications 1 à 3, caractérisé en ce qu'on implante sur les bras porteurs (8, 9) des buses d'eau sous pression et/ou des outils de nettoyage mécaniques pour nettoyer la surface d'une zone à usiner de la pièce de construction tubulaire (3) et enlever les couches superficielles et/ou les salissures gênantes.

Fig. 1

Fig. 2

Fig. 3

Fig. 4

Fig. 5

Fig. 6

Fig. 7